# DEMANDE DE BREVET EUROPEEN

(11) **EP 1 574 685 A1**
(43) Date de publication de la demande: **14.09.2005**
(21) Numéro de dépôt: 05290281.4
(22) Date de dépôt: 09.02.2005
(51) Int. Cl.: F02C 3/067, F01D 5/03, F02K 3/072

(54) **Turboréacteur ayant deux soufflantes contrarotatives solidaires d'un compresseur à basse pression contrarotatif**

(30) Priorité: 11.02.2004 FR 0401334
(71) Demandeur: SNECMA MOTEURS, 75015 Paris (FR)
(72) Inventeur: Bart, Jacques, 91370 Verrieres-le-Buisson (FR); Lacorre, Fabienne, 77000 Vaux le Penil (FR); Le Rousseau, Vanessa, 94000 Creteil (FR); Lebret, Yann, 77950 Maincy (FR); Morel, Patrick, 77590 Chartrettes (FR)
(74) Mandataire: Barbin le Bourhis, Joel

(57) **Abrégé**

L'invention concerne un turboréacteur ayant à l'avant d'un carter intermédiaire (2) deux soufflantes (3, 5) contrarotatives solidaires d'un compresseur à basse pression (7) contrarotatif. Les pales (14) de la soufflante arrière (5) s'étendent dans le flux secondaire (F2) à partir d'une roue (15) entourant le rotor extérieur (20) du compresseur à basse pression (7). La distance (L) entre les pales (10) de la soufflante avant (3) et les pales (14) de la soufflante arrière (5) est au moins égale à deux fois la longueur (I) de la projection axiale de la corde de tête des pales (10) de la soufflante avant (3).

## Description

L'invention concerne le domaine des turboréacteurs à grand taux de dilution qui comportent deux soufflantes contrarotatives.

Elle concerne plus précisément un turboréacteur triple corps, double flux, à grand taux de dilution, comportant à l'avant d'un carter intermédiaire une soufflante avant et une soufflante arrière dont les pales s'étendent radialement vers l'extérieur jusqu'au carter de soufflante, qui délimite extérieurement la veine du flux secondaire, ainsi qu'un compresseur basse pression destiné à comprimer l'air entrant dans le canal du flux primaire, lesdites soufflantes avant et arrière étant entraînées en rotation directement et séparément par deux arbres coaxiaux contrarotatifs et ledit compresseur basse pression comportant deux ensembles de couronnes d'aubes contrarotatives également entraînées par lesdits arbres.

Dans les turboréacteurs de grande puissance comportant une seule soufflante de grand diamètre, la vitesse périphérique de l'extrémité des pales doit être inférieure à la vitesse du son pour éviter un bruit important indésirable qui se traduit par une perte de l'efficacité aérodynamique.

La diminution de la vitesse à la périphérie des pales peut être obtenue par un réducteur de vitesse interposé entre le rotor de la soufflante et l'arbre d'entraînement. Cependant, un réducteur et les accessoires associés se traduisent par une plus grande complexité et un poids plus important du moteur.

Une autre solution consiste à équiper l'avant du turboréacteur de deux soufflantes contrarotatives entraînées directement par des arbres d'entraînement coaxiaux, qui entraînent également les rotors contrarotatifs du compresseur basse pression du flux primaire.

FR 2 560 642 et FR 2 603 344 décrivent un tel type de turboréacteur. Dans ces documents, la soufflante arrière est disposée autour du compresseur basse pression, immédiatement derrière la soufflante avant. Les pales de la soufflante arrière sont ainsi voisines des pales de la soufflante avant, ce qui entraîne des nuisances sonores. En outre, en cas d'ingestion, l'écartement faible entre les deux couronnes de pales ne permet pas de garantir des déformations sans contact entre les profils des pales des deux soufflantes.

FR 2 603 343 décrit également un turboréacteur ayant deux soufflantes contrarotatives dans lequel les rotors du compresseur basse pression sont disposés axialement entre les deux soufflantes. Cette disposition augmente exagérément le porte-à-faux du compresseur basse pression à l'avant de la soufflante arrière.

Le but de l'invention est de proposer un turboréacteur ayant deux soufflantes contrarotatives qui respecte les critères acoustiques et qui permette un bon gavage du compresseur à haute pression.

Ce but est atteint selon l'invention par le fait que les pales de la soufflante arrière sont disposées dans la veine du flux secondaire et s'étendent à partir d'une roue entourant le compresseur basse pression, ce dernier comportant un rotor extérieur entraîné par l'arbre de rotation de la soufflante arrière et dans l'alésage duquel s'étendent plusieurs couronnes d'aubes mobiles, et comportant en outre un rotor intérieur entraîné par l'arbre de rotation de la soufflante avant et à la périphérie duquel s'étendent plusieurs couronnes d'aubes mobiles, lesdites couronnes mobiles alternant avec les couronnes d'aubes mobiles du rotor extérieur dans la veine du flux primaire, et par le fait que la distance entre les pales de la soufflante avant et les pales de la soufflante arrière est au moins égale à deux fois la longueur de la projection axiale de la corde de tête des pales de la soufflante avant.

Ainsi, pour éviter d'augmenter la longueur du moteur, on agence la deuxième soufflante au voisinage du compresseur, radialement extérieurement, dans le flux secondaire.

De manière avantageuse, la distance entre les pales des deux soufflantes est au moins égale à 2,5 fois la longueur de la projection axiale de la corde de tête des pales de la soufflante avant.

Plus avantageusement, la distance entre les pales des deux soufflantes est au moins égale à 3,5 fois la longueur de la projection axiale de la corde de tête des pales de la soufflante avant.

Ces valeurs, supérieures à ce que préconise FR 2 603 343 permettent d'améliorer les performances acoustiques du moteur.

De préférence, les arbres d'entraînement sont entraînés par deux turbines basse pression contrarotatives.

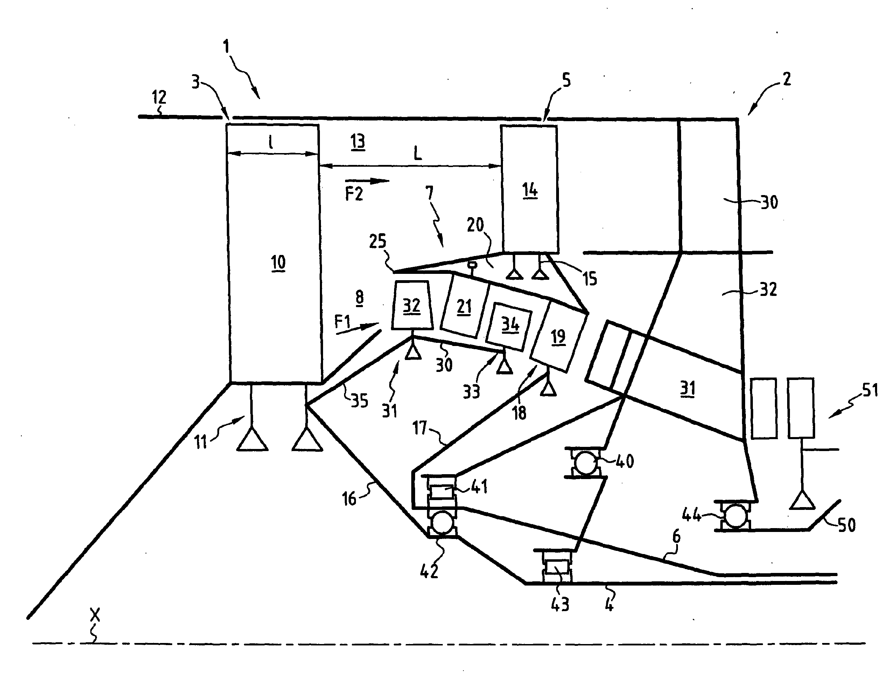

D'autres caractéristiques et avantages de l'invention ressortiront à la lecture de la description suivante faite à titre d'exemple et en référence au dessin annexé dans lequel :

la figure unique est une demi-coupe schématique de l'avant d'un turboréacteur ayant deux soufflantes, conforme à l'invention.

Le dessin montre schématiquement l'avant 1 d'un turboréacteur d'axe X, qui comporte à l'avant d'un carter intermédiaire 2, une soufflante avant 3 entraînée par un arbre d'entraînement intérieur 4, une soufflante arrière 5 entraînée par un arbre d'entraînement intermédiaire 6 coaxial à l'arbre intérieur 4 et entourant ce dernier, et un compresseur basse pression 7 destiné à comprimer l'air pénétrant dans le canal 8 du flux primaire F1 et disposé axialement entre la soufflante avant 3 et le carter intermédiaire 2.

La soufflante avant 3 comporte des pales 10 qui s'étendent à la périphérie d'une roue 11 jusqu'à un carter de soufflante 12 qui délimite extérieurement le canal 13 du flux secondaire F2.

La soufflante arrière 5 comporte également des pales 14 qui s'étendent à la périphérie d'une roue 15 jusqu'au carter de soufflante 12, à travers le canal 13 du flux secondaire F2. La roue 15 est disposée radialement à l'extérieur du compresseur basse pression 7.

La roue 11 de la soufflante avant 3 est reliée par un cône 16 à l'arbre intérieur 4, tandis que la roue 15 de la soufflante arrière 5 est reliée à l'arbre intermédiaire 6 par un cône 17 via une couronne aval 18 d'aubes mobiles 19 du compresseur basse pression 7.

Le carter intermédiaire 2 présente une grille structurale externe 30 dans la veine du flux secondaire F2 et une grille structurale interne 31 dans la veine du flux primaire F1. La grille structurale externe 30 est reliée extérieurement au carter de soufflante 12. Un caisson annulaire 32 est interposé entre la grille structurale externe 30 et la grille structurale interne 31.

Le compresseur à basse pression 7 comporte, un rotor extérieur 20 solidaire de la roue 15 de la soufflante arrière 5 dans l'alésage duquel s'étendent radialement vers l'intérieur à travers le canal 8, en plus de la couronne aval 18 d'aubes mobiles 19, une deuxième couronne d'aubes mobiles 21, située en amont de la couronne aval 18. Il comporte également un rotor intérieur 30 à la périphérie duquel s'étendent radialement vers l'extérieur, une couronne amont 31 d'aubes mobiles 32, disposée en amont de la couronne d'aubes mobiles 21, et une couronne 33 d'aubes mobiles 34 intercalées entre les aubes mobiles 21 et les aubes mobiles 19 de la couronne aval 18. Le rotor intérieur 30 est relié par une virole 35 au cône 16 ou à la roue 11 de la soufflante avant. Le rotor extérieur 20 présente à l'avant un bec séparateur 25 du flux primaire F1 et du flux secondaire F2.

Les arbres d'entraînement 4 et 6 sont entraînés en rotation, dans des sens opposés, par deux turbines contrarotatives, ou de préférence par une turbine de travail ayant deux rotors, l'un intérieur et l'autre extérieur, dont les couronnes d'aubes mobiles alternent axialement. Cette disposition permet de diminuer la longueur de la turbine de travail et sa masse du fait de l'absence de stator.

Le carter intermédiaire 2 supporte l'arbre d'entraînement 6 de la soufflante arrière 5 et du rotor extérieur 20 du compresseur à basse pression 7, par l'intermédiaire d'un palier de butée 40 et d'un palier à roulement 41, et supporte l'arbre d'entraînement 4 de la soufflante avant 3 et du rotor intérieur 30 du compresseur à basse pression 7 par l'intermédiaire d'un palier de butée interarbres 42 situé sous le palier à roulement 41 et d'un palier à roulement interarbres 43 situé sous le palier de butée 40.

La référence 44 désigne un palier de butée interposé entre le carter intermédiaire 2 et l'arbre d'entraînement 50 du compresseur à haute pression 51 situé à l'arrière du carter intermédiaire 2.

La distance L entre les pales 10 de la soufflante avant 3 et les pales 14 de la soufflante arrière 3 est suffisamment grande pour respecter les critères acoustiques.

Cette distance L est au moins égale à deux fois la longueur I de la projection axiale de la corde de tête des pales 10 de la soufflante avant 3. De préférence la distance L est au moins égale à 2,5 fois, voire 3,5 fois, la longueur I.

## Revendications

1. Turboréacteur triple corps, double flux, à grand taux de dilution, comportant à l'avant d'un carter intermédiaire (2) une soufflante avant (3) et une soufflante arrière (5) dont les pales (10, 14) s'étendent radialement vers l'extérieur jusqu'au carter de soufflante (12), qui délimite extérieurement la veine du flux secondaire (F2), ainsi qu'un compresseur basse pression (7) destiné à comprimer l'air entrant dans le canal du flux primaire (F1), lesdites soufflantes avant et arrière (3, 5) étant entraînées en rotation directement et séparément par deux arbres coaxiaux (4, 6) contrarotatifs et ledit compresseur (7) basse pression comportant deux ensembles de couronnes d'aubes contrarotatives également entraînées par lesdits arbres,
**caractérisé par le fait que** les pales (14) de la soufflante arrière (5) sont disposées dans la veine du flux secondaire (F2) et s'étendent à partir d'une roue (15) entourant le compresseur basse pression (7), ce dernier comportant un rotor extérieur (20) entraîné par l'arbre de rotation (6) de la soufflante arrière (5) et dans l'alésage duquel s'étendent plusieurs couronnes d'aubes mobiles (19, 21), et comportant en outre un rotor intérieur (30) entraîné par l'arbre de rotation (4) de la soufflante avant (3) et à la périphérie duquel s'étendent plusieurs couronnes d'aubes mobiles (32, 34), lesdites couronnes mobiles alternant avec les couronnes d'aubes mobiles du rotor extérieur (20) dans la veine du flux primaire (F1), et
**par le fait que** la distance (L) entre les pales (10) de la soufflante avant (3) et les pales (14) de la soufflante arrière (5) est au moins égale à deux fois la longueur (I) de la projection axiale de la corde de tête des pales (10) de la soufflante avant (3).

2. Turboréacteur selon la revendication 1, **caractérisé par le fait que** la distance (L) entre les pales (10, 14) des deux soufflantes (3, 5) est au moins égale à 2,5 fois la longueur (I) de la projection axiale de la corde de tête des pales de la soufflante avant (3).

3. Turboréacteur selon la revendication 2, **caractérisé par le fait que** la distance (L) entre les pales (10, 14) des deux soufflantes (3, 5) est au moins égale à 3,5 fois la longueur (I) de la projection axiale de la corde de tête des pales de la soufflante avant (3).
